# EUROPEAN PATENT SPECIFICATION

(11) **EP 2 110 240 B1**
(45) Date of publication and mention of the grant of the patent: **20.04.2011**
(21) Application number: 08253474.4
(22) Date of filing: 24.10.2008
(51) Int. Cl.: B32B 27/32, B32B 27/34

(54) **Printed sterilizable laminate for aseptic packaging**
Gedrucktes sterilisierbares Laminat für die aseptische Verpackung
Stratifié imprimé stérilisable pour un conditionnement aseptique

(30) Priority: 09.11.2007 US 2691 P; 15.05.2008 US 152615
(43) Date of publication of application: 21.10.2009
(73) Proprietor: Cryovac, Inc., Duncan, SC 29334 (US)
(72) Inventor: Bekele, Solomon, Taylors 29687 South Carolina (US)
(74) Representative: Jackson, Martin Peter

(56) References cited:
- WO-A-2006/110316
- WO-A-2007/059331

## Description

### Field of the Invention

The invention relates to a printed laminate for aseptic packaging, and to a printed aseptic package and a method of making a printed aseptic package.

### Background of the Invention

Aseptic food packaging is a well known method of packaging foods for which sterilization of the food and the packaging material containing the food is required. It is known to produce sterilized packaging in which a sterile food product is placed in a sterilized container such as a pouch. The food product is thus preserved for later storage or use. Various methods of sterilizing the container, and filling the container with a sterilized product, are known. Hydrogen peroxide is a common medium for sterilization of the packaging material.

In aseptic packaging applications such as vertical form fill seal pouch packaging, where hydrogen peroxide sterilization treatments are used, some films can unduly stretch after being made into a pouch and filled with the sterilized food product at elevated temperatures. These films are thus less desirable or unsuitable for this end use application where dimensional stability of the packaging material is of concern.

One current commercial packaging material for aseptic applications provides such dimensional stability, but in manufacture requires that various components of the material be laminated together. This is a relatively costly means of producing packaging materials. In the commercial laminate, biaxially oriented nylon 6 film is laminated by a conventional lamination adhesive such as polyester to a discrete multilayer substrate film. One commercial substrate film has the following nine layer construction, with layer gauge in mm (mils) shown below each layer:

| | | | | | | | | |
|---|---|---|---|---|---|---|---|---|
| LDPE | / Adh | / PA6 | /Adh | / HDPE | /PE | / EVOH | / LDPE | / HDPE |
| 0.056 (2.2) | 0.0025 (0.10) | 0.0178 (0.70) | 0.0020 (0.08) | 0.0051 (0.20) | 0.0025 (0.10) | 0.0038 (0.15) | 0.0025 (0.10) | 0.0051 (0.20) |

Where the values below each resin are the layer gauge in mm (mils), and where:
LDPE = low density polyethylene
Adh = lamination adhesive
PA6 = nylon 6
HDPE = high density polyethylene
PE = polyethylene
EVOH = ethylene/vinyl alcohol copolymer

An important consideration in some aseptic packaging environments is that the packaging material exhibit good dimensional stability under load (e.g. the load of the contained food product when the packaging material is made into a package), and yet remain ductile and abuse resistant under packaging, storage, and transportation conditions. It is desirable that the packaging film possess relatively high storage modulus (E') (ASTM D5279-01), but also possess relatively high loss modulus (E") values at temperatures of from -150°C to 150°C.

Copending patent application US Serial No. 11/100739, filed 7 April, 2005, assigned to a common assignee with the present application, and entitled "Sterilizable Coextruded Film For Aseptic Packaging", and published as WO 2006/110316, discloses a coextruded multilayer film suitable for packaging products in aseptic conditions. It has been found that when made into pouches, and filled with a food product, where the filled pouch is less than 2 kilograms in weight, the film is dimensionally stable under load in an aseptic environment, i.e. at temperatures of 60°C. However, for heavier filled pouches, the film is less stable dimensionally, and therefore less desirable for aseptic packaging applications.

Copending patent application US Serial No. 11/517728, filed September 8, 2006, assigned to a common assignee with the present application, and entitled "Dimensionally Stable Sterilizable Coextruded Film For Aseptic Packaging", and published as WO 2007/059331, discloses a dimensionally stable coextruded film suitable for packaging products in aseptic conditions. This material exhibits improved dimensional stability under load for heavier, larger aseptic filled pouches in an aseptic environment, i.e. at temperatures of 60°C to 80°C.

Sometimes, in a commercial application, it is desirable to produce a printed package, so that trademark, logo, product type, plant information, content information, or other indicia can be displayed on the package. Such printing can provide important information to the end-user of the packaged food-information such as the ingredients of the packaged food, the nutritional content, package opening instructions, food handling and preparation instructions, and food storage instructions. The printing may also provide a pleasing image and/or trademark or other advertising information to enhance the retail sale of the packaged product.

Commercial film materials represented by copending patent application US Serial No. 11/517728(WO 2007/059331) are typically formed into pouches, by a VFFS (vertical/form/fill/seal process) having a final wall thickness of from 125 to 130 micrometers, i.e. approximately 5 mils film thickness. Such thicknesses offer a good balance of film properties, including abuse resistance, seal integrity, oxygen barrier properties, dimensional stability, etc., when used in an aseptic packaging system.

Printed information could be placed on the outside surface of a package. However, such surface printing could be directly exposed to a heated bar during a heat seal operation. As a result, the surface printing may become smeared or otherwise degraded. A surface printing can also be exposed to other physical abuses during distribution and display of a packaged product. Such abuse may also degrade the clarity and presentation of the printed image. The packaging regime of an aseptic process could also compromise the integrity of the printed image, because printing inks are typically incompatible with hydrogen peroxide.

In general packaging applications, a common practice for producing a printed package is to produce a film substrate having all the desired physical traits, and then to laminate a second film, such as a biaxially oriented PET (polyethylene terephthalate) film, or a biaxially oriented nylon film, to the film substrate with a suitable lamination adhesive such as polyurethane. Before the lamination step, the indicia to be printed is either printed on the surface of the film substrate to be adhered to the biaxially oriented laminating film, or reverse printed on the surface of the biaxially oriented laminating film to be adhered to the film substrate. These collectively are known as trap printing.

One conventional laminating film is a commercially available biaxially oriented PET having a thickness of about 12.5 micrometers (0.5 mils). It was found that when this biax PET was laminated to a printed coextruded film substrate of 127 micrometers thickness, of the type disclosed in USSN 11/517728, a total laminate thickness of about 140 micrometers was obtained. This laminate proved to be difficult to seal, both for longitudinal and transverse seals. The aseptic application is particularly demanding because:
- elevated film sterilization temperatures (60°C to 80°C) are involved;
- the process is a vertical form/fill/seal process, therefore the bottom transverse seal in each packaging cycle receives a load of product very soon after that seal is made, requiring good hot seal strength; and
- the products being packaged are typically liquid or liquid/solid combinations, inducing a hydraulic load on the bottom seal in particular.

Another factor to be kept in mind, is that the seal bars in a VFFS system must seal through relatively high melting point polymers present in the laminating films, such as PET or nylon, where a printed laminate as described above is used. It is difficult to get enough heat, quickly enough, to the material in the seal area of the pouch to get a reliable seal during packaging operations, while still maintaining packaging line speeds.

### Summary Of The Invention

In a first aspect of the present invention, a printed sterilizable laminate for aseptic packaging comprises
a first coextruded multilayer film comprising a core layer, having a first major surface and a second major surface, comprising ethylene vinyl alcohol copolymer, polymeric adhesive, or polyamide; a first intermediate layer, adjacent the first major surface of the core layer, comprising polyamide; a second intermediate layer, adjacent the second major surface of the core layer, comprising polyamide; an outer layer comprising amorphous cyclic olefin copolymer, or a blend of amorphous cyclic olefin copolymer and at least one olefinic copolymer; an inner layer comprising an olefinic copolymer, or a blend of an olefinic copolymer and amorphous cyclic olefin copolymer; a first tie layer adhering the first intermediate layer to the outer layer; and a second tie layer adhering the second intermediate layer to the inner layer; the first coextruded multilayer film having an inside surface and an outside surface;
a second coextruded multilayer film comprising a core layer, having a first major surface and a second major surface, comprising ethylene vinyl alcohol copolymer, polymeric adhesive, or polyamide; a first intermediate layer, adjacent the first major surface of the core layer, comprising polyamide; a second intermediate layer, adjacent the second major surface of the core layer, comprising polyamide; an outer layer comprising amorphous cyclic olefin copolymer, or a blend of amorphous cyclic olefin copolymer and at least one olefinic copolymer; an inner layer comprising an olefinic copolymer, or a blend of an olefinic copolymer and amorphous cyclic olefin copolymer; a first tie layer adhering the first intermediate layer to the outer layer; and a second tie layer adhering the second intermediate layer to the inner layer; the second coextruded multilayer film having an inside surface and an outside surface;
a printed image disposed on the outside surface of the first coextruded multilayer film, or the inside surface of the second coextruded multilayer film; and
an adhesive that bonds the outer layer of the first coextruded multilayer film to the inner layer of the second coextruded multilayer film.

In a second aspect of the present invention, an aseptic package comprises a sterilized food product, and a sterilized pouch in which the sterilized food product is disposed, the sterilized pouch comprising a printed laminate comprising
a first coextruded multilayer film comprising a core layer, having a first major surface and a second major surface, comprising ethylene vinyl alcohol copolymer, polymeric adhesive, or polyamide; a first intermediate layer, adjacent the first major surface of the core layer, comprising polyamide; a second intermediate layer, adjacent the second major surface of the core layer, comprising polyamide; an outer layer comprising amorphous cyclic olefin copolymer, or a blend of amorphous cyclic olefin copolymer and at least one olefinic copolymer; an inner layer comprising an olefinic copolymer, or a blend of an olefinic copolymer and amorphous cyclic olefin copolymer; a first tie layer adhering the first intermediate layer to the outer layer; and a second tie layer adhering the second intermediate layer to the inner layer; the first coextruded multilayer film having an inside surface and an outside surface;
a second coextruded multilayer film comprising a core layer, having a first major surface and a second major surface, comprising ethylene vinyl alcohol copolymer, polymeric adhesive, or polyamide; a first intermediate layer, adjacent the first major surface of the core layer, comprising polyamide; a second intermediate layer, adjacent the second major surface of the core layer, comprising polyamide; an outer layer comprising amorphous cyclic olefin copolymer, or a blend of amorphous cyclic olefin copolymer and at least one olefinic copolymer; an inner layer comprising an olefinic copolymer, or a blend of an olefinic copolymer and amorphous cyclic olefin copolymer; a first tie layer adhering the first intermediate layer to the outer layer; and a second tie layer adhering the second intermediate layer to the inner layer; the second coextruded multilayer film having an inside surface and an outside surface;
a printed image disposed on the outside surface of the first coextruded multilayer film, or the inside surface of the second coextruded multilayer film; and
an adhesive that bonds the outer layer of the first coextruded multilayer film to the inner layer of the second coextruded multilayer film.

In a third aspect of the present invention, a method of making an aseptic package comprises sterilizing a food product; sterilizing a printed laminate, the laminate comprising
a first coextruded multilayer film comprising a core layer, having a first major surface and a second major surface, comprising ethylene vinyl alcohol copolymer, polymeric adhesive, or polyamide; a first intermediate layer, adjacent the first major surface of the core layer, comprising polyamide; a second intermediate layer, adjacent the second major surface of the core layer, comprising polyamide; an outer layer comprising amorphous cyclic olefin copolymer, or a blend of amorphous cyclic olefin copolymer and at least one olefinic copolymer; an inner layer comprising an olefinic copolymer, or a blend of an olefinic copolymer and amorphous cyclic olefin copolymer; a first tie layer adhering the first intermediate layer to the outer layer; and a second tie layer adhering the second intermediate layer to the inner layer; the first coextruded multilayer film having an inside surface and an outside surface;
a second coextruded multilayer film comprising a core layer, having a first major surface and a second major surface, comprising ethylene vinyl alcohol copolymer, polymeric adhesive, or polyamide; a first intermediate layer, adjacent the first major surface of the core layer, comprising polyamide; a second intermediate layer, adjacent the second major surface of the core layer, comprising polyamide; an outer layer comprising amorphous cyclic olefin copolymer, or a blend of amorphous cyclic olefin copolymer and at least one olefinic copolymer; an inner layer comprising an olefinic copolymer, or a blend of an olefinic copolymer and amorphous cyclic olefin copolymer; a first tie layer adhering the first intermediate layer to the outer layer; and a second tie layer adhering the second intermediate layer to the inner layer; the second coextruded multilayer film having an inside surface and an outside surface;
a printed image disposed on the outside surface of the first coextruded multilayer film, or the inside surface of the second coextruded multilayer film; and
an adhesive that bonds the outer layer of the first coextruded multilayer film to the inner layer of the second coextruded multilayer film;
forming the sterilized film into a pouch; filling the pouch with the sterilized food product; and sealing the pouch.

### Brief Description Of The Drawings

In the drawings presented by way of illustration of the invention:

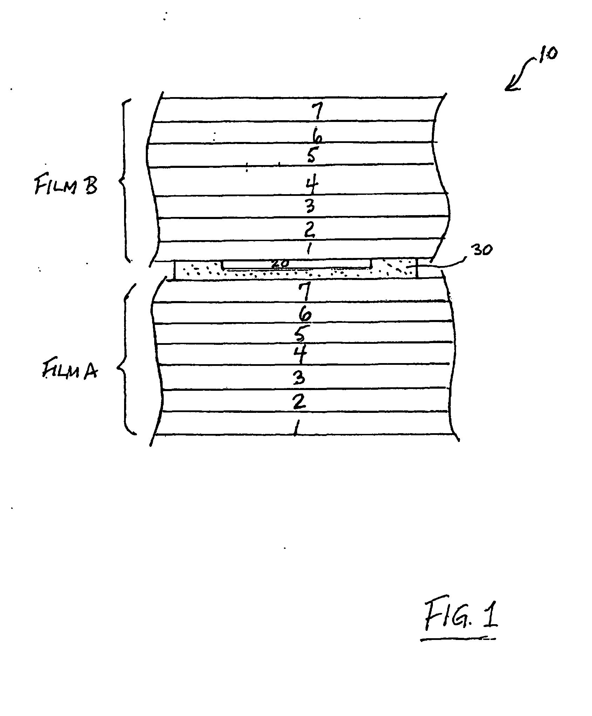

FIG.1 is a schematic cross sectional view of a printed sterilizable laminate in accordance with one embodiment of the invention.

### Definitions

"Aseptic" herein refers to a process wherein a sterilized container or packaging material, e.g. a pre-made pouch or a pouch constructed in a vertical form/fill/seal process, is filled with a sterilized food product, in a hygienic environment. The food product is thus rendered shelf stable in normal nonrefrigerated conditions. "Aseptic" is also used herein to refer to the resulting filled and closed package. The package or packaging material, and the food product, are typically separately sterilized before filling.

"High density polyethylene" is an ethylene homopolymer or copolymer with a density of 0.940 g/cc or higher.

"Polypropylene" is a propylene homopolymer or copolymer having greater than 50 mole percent propylene prepared by conventional heterogeneous Ziegler-Natta type initiators or by single site catalysis. Propylene copolymers are typically prepared with ethylene or butene comonomers.

"Ethylene/alpha-olefin copolymer" (EAO) herein refers to copolymers of ethylene with one or more comonomers selected from C₃ to C₁₀ alpha-olefins such as propene, butene-1, hexene-1, octene-1, etc. in which the molecules of the copolymers comprise long polymer chains with relatively few side chain branches arising from the alpha-olefin which was reacted with ethylene. This molecular structure is to be contrasted with conventional high pressure low or medium density polyethylenes which are highly branched with respect to EAOs and which high pressure polyethylenes contain both long chain and short chain branches. EAO includes such heterogeneous materials as linear medium density polyethylene (LMDPE), linear low density polyethylene (LLDPE), and very low and ultra low density polyethylene (VLDPE and ULDPE), such as DOWLEX^{™} and ATTANE^{™} resins supplied by Dow, and ESCORENE^{™} resins supplied by Exxon; as well as linear homogeneous ethylene/alpha olefin copolymers (HEAO) such as TAFMER^{™} resins supplied by Mitsui Petrochemical Corporation, EXACT^{™} and EXCEED^{™} resins supplied by Exxon, long chain branched (HEAO) AFFINITY^{™} resins and ELITE^{™} resins supplied by the Dow Chemical Company, ENGAGE^{™} resins supplied by DuPont Dow Elastomers, and SURPASS^{™} resins supplied by Nova Chemicals.

"Ethylene homopolymer or copolymer" herein refers to ethylene homopolymer such as low density polyethylene; ethylene/alpha olefin copolymer such as those defined herein; ethylene/vinyl acetate copolymer; ethylene/alkyl acrylate copolymer; ethylene/(meth)acrylic acid copolymer; or ionomer resin.

"Multicomponent ethylene/alpha-olefin interpenetrating network resin" or "IPN resin" herein refers to multicomponent molecular mixtures of polymer chains. Because of molecular mixing, IPN resins cannot be separated without breaking chemical bonds. Polymer chains combined as IPN resins are interlaced at a molecular level and are thus considered true solid state solutions. Interpenetrating networks, unlike blends, become new compositions exhibiting properties distinct from parent constituents. Interpenetrating networks provide phase co-continuity. Due to the mixture of at least two molecular types, these compositions may exhibit bimodal or multimodal curves when analyzed using TREF or CRYSTAF. Interpenetrating networks as herein used includes semi-interpenetrating networks and therefore describes crosslinked and uncrosslinked multicomponent molecular mixtures having a low density fraction and a high density fraction.

"Olefinic" and the like herein refers to a polymer or copolymer derived at least in part from an olefinic monomer.

"Polyamide" herein refers to polymers having amide linkages along the molecular chain, and preferably to synthetic polyamides such as nylons.

"Cyclic olefin" herein means a compound containing a polymerizable carbon-carbon double bond that is either contained within an alicyclic ring, e.g., as in norbornene, or linked to an alicyclic ring, e.g., as in vinyl cyclohexane. Polymerization of the cyclic olefin provides a polymer comprising an alicyclic ring as part of or pendant to the polymer backbone.

"Cyclic olefin copolymer" and the like herein (e.g. "cycloolefin copolymer") means a copolymer formed by polymerization of a cyclic olefin with a comonomer. An example of a cyclic olefin copolymer is ethylene/norbornene copolymer, such as that supplied by Ticona under the trademark TOPAS^{™}, by Zeon under the trademark ZEONOR^{™} and by Mitsui under the trademark APEL^{™}.

"Polymer" and the like herein means a homopolymer, but also copolymers thereof, including bispolymers, terpolymers, etc.

All compositional percentages used herein are presented on a "by weight" basis, unless designated otherwise.

### Detailed Description of the Invention

### The Aseptic Process

Aseptic packaging typically involves the sterilization of liquid foods and beverages outside the package, and separate sterilization of the packaging material, to produce a shelf stable package. Ultra high temperature is used to rapidly heat the food product, followed by cooling of the product, before the product is put into the pouch or other container formed from the packaging material. Processing times for the product are generally 3 to 15 seconds; temperatures range from about 91-141°C (195°F to 285°F).

### Film sterilization

An example of a commercially available aseptic form/fill/seal equipment system is the AF3S™ packaging system from Orihiro, having a film sterilization section including a tank for hydrogen peroxide, a drying chamber, a form/fill/ seal section, and a unit which supplies and circulates hydrogen peroxide and controls temperature, air pressure etc. Film is continuously sterilized by hydrogen peroxide set at a temperature of between 60°C and 80°C in a chemical tank. After film leaves this tank, hot air at a temperature of between 60°C and 80°C is used to dry out the film to remove hydrogen peroxide from the film. Temperature and flow level for the hydrogen peroxide is controlled by steam to raise temperature, and water is supplied for cooling. Piping between the food sterilizer, such as the food sterilizer system available from Catelli under the trademark ANTARES^{™}, and the packaging unit can be initially sterilized using steam heat or hot water. After film exits the peroxide tank, the film is scraped by plates and by an air knife to make it easy to dry.

### Film Embodiments of the Invention

Figure 1 discloses a printed sterilizable laminate in accordance with one embodiment of the invention. The laminate 10 includes a first coextruded film, Film A, and a second coextruded film, Film B. These films are adhered together by a suitable laminating adhesive 30, such as polyurethane. The laminating adhesive can be applied to layer 1 of Film B, or to layer 7 of Film A. or both. A printed image 20 is shown installed on the inside surface of Film B. As shown in the embodiment of Figure 1, Films A and B are identical with respect to number and placement of layers. Thus, layer 1 of Film A is the same composition, and has the same relative position in Film A, as layer 1 of Film B with respect to the overall construction of Film B.

In one embodiment, layer 7 of Film A is different in composition from layer 1 of Film B, and layer 1 of Film A is different in composition from layer 7 of Film B. This embodiment is useful where it is desired, in the final laminate, to have the same sealant layer (layer 1 of Film A) as in the sealant layer 1 of each of component Films A and B; and to have, in the final laminate, the same outer abuse layer (layer 7 of Film B) as in the abuse layer 7 of each of component Films A and B.

A representative film structure of the invention is thus as follows:

| |
|---|
| Film A / Trap Printed Image/ Film B |
| Adhesive |

where each of Film A and Film B are coextruded and have the following construction:

| Layer / | Layer / | Layer / | Layer / | Layer / | Layer / | Layer |
|---|---|---|---|---|---|---|
| 1 | 2 | 3 | 4 | 5 | 6 | 7 |
| Amorphous Material or optionally polyolefin blended with polyolefin | Tie | nylon | Core | Nylon | Tie | Amorphous Material |

Core layer 4 of the above film structure can comprise any suitable ethylene/vinyl alcohol copolymer (EVOH) material, and can be blended in any proportion with other polymeric materials or organic or inorganic additives as desired. Alternatively, core layer 4 can comprises a tie layer, such as a suitable polymeric adhesive, or nylon.

Intermediate layers 3 and 5 each comprise a polyamide, such as a semicrystalline polyamide such as nylon 6. The composition of layers 3 and 5 can differ, e.g. can comprise different polyamides; or can be the same.

In one embodiment, layers 3 and 5 can each comprise 100% semicrystalline polyamide such as nylon 6.

In an alternative embodiment, layers 3 and 5 can each comprise a blend of an amorphous polyamide and a semicrystalline polyamide. The amorphous polyamide can comprise any suitable percent of the overall polyamide blend, and can comprise e.g. less than 50 wt. %, such as less than 40 wt. %, and less than 30 wt. % of the polyamide blend of layers 3 and 5. The amorphous polyamide can comprise from 5 to 45 wt. %, such as from 20 to 40 wt. %, such as from 25 to 35 wt. % of the polyamide blend of layers 3 and 5. The blend ratios of layers 3 and 5 can be the same, or can differ.

Useful commercially available amorphous polyamides include FE4494™ and FE4495™. These are PA6I/66/69 polyamides available from EMS. Also useful is FE7103™, a PA6I/MXDI polyamide available from EMS.

Other amorphous polyamides that can be used are PA66/6T; PA66/6I; PA66I/66T; PA6/6T; and PA6/6I. Also useful is PA6/3/T available from Degussa as TROGAMID™, and PA6I/6T available from DuPont as SELAR™ PA 3426.

The amorphous polyamide has in one embodiment a glass transition temperature of at least 80° C. The semicrystalline polyamide in one embodiment has a glass transition temperature of at least 55° C.

Tie layers 2 and 6, and in one embodiment core layer 4, can comprise any suitable polymeric adhesive that functions to bond two layers together. Materials that can be used in embodiments of the present invention include e.g. ethylene/vinyl acetate copolymer; anhydride grafted ethylene/vinyl acetate copolymer; anhydride grafted ethylene/alpha olefin copolymer; anhydride grafted polypropylene; anhydride grafted low density polyethylene; ethylene/ methyl acrylate copolymer; anhydride grafted high density polyethylene, ionomer resin, ethylene/acrylic acid copolymer; ethylene/methacrylic acid copolymer; and anhydride grafted ethylene/ methyl acrylate copolymer. A suitable anhydride can be maleic anhydride. Tie layers 2 and 6 can be the same, or can differ. The choice of tie layers depends at least in part on the choice of polymer for the outer layers 1 and 7 respectively.

Layer 1 of Film A will typically function as a sealant layer and/or food contact layer of the film. This layer can comprise one or more semicrystalline olefinic polymers. Polymers that may be used for the layer 1 include ethylene polymer or copolymer, ethylene/alpha olefin copolymer, ethylene/vinyl acetate copolymer, ionomer resin, ethylene/acrylic or methacrylic acid copolymer, ethylene/ acrylate or methacrylate copolymer, low density polyethylene, high density polyethylene, propylene homopolymer, propylene/ethylene copolymer, or blends of any of these materials in any suitable percentages.

Alternatively, layer 1 can comprise a blend of an olefinic copolymer and amorphous cyclic olefin copolymer.

Layer 7 comprises an amorphous polymer with a relatively high glass transition temperature (Tg).

Layer 7 comprises in one embodiment 100% amorphous cyclic olefin copolymer. In another embodiment, layer 7 comprises a blend of a) amorphous cyclic olefin copolymer, aliphatic polyamide, aromatic polyamide, and/or aromatic copolyamide, and (b) at least one semicrystalline olefinic polymer, in any suitable blend percentages.

The amorphous polymer of layer 7, and of layer 1 in embodiments where the amorphous polymer is present, is characterized by a glass transition temperature (Tg) of greater than about 30°C, such as between 60°C and 150°C, between 65°C and 140°C, between 70°C and 120°C, from 60°C to 120°C, and from 60°C to 100°C. Examples of such materials include ethylene/norbornene copolymer (ENB), recently available from Ticona under the trademark TOPAS^{™}. Various grades are available, including (with glass transition temperature indicated in parenthesis) TKX-0001^{™} (136°C), 5010L^{™} (110°C), 5013S^{™} (136°C), 6013F^{™} (140°C), 9506X1^{™} (68°C reported/33°C measured), and 8007 F-04^{™}(80°C).

Other cyclic olefin copolymers are available from Mitsui under the trademark APEL^{™}. Various grades are available, including (with glass transition temperature indicated in parenthesis) 8008T^{™} (70°C), 6509T^{™} (80°C), 6011T^{™} (115°C), 6013T^{™} (135°C), and 6014D^{™} (147°C).

Examples of polymers or copolymers having a glass transition temperature (Tg) of greater than about 60°C are aliphatic homopolyamide such as nylon 6, aromatic polyamide or copolyamide, polycarbonate (Tg = 147°C to 150°C), polyethylene terephthalate (Tg = 80°C), polyethylene naphthalate (Tg = 125°C), polyethylene terephthalate/naphthalate (Tg = 80°C to 120°C), and polybutylene naphthalate (Tg = 82°C).

In one embodiment, the glass transition temperature of the amorphous polymer should be no more than 10°C greater than the melting point of an olefinic polymer with which the amorphous polymer is blended, and in one embodiment the glass transition temperature of the amorphous polymer should be no greater than the melting point of an olefinic polymer with which the amorphous polymer is blended. In one embodiment, layer 7 of Film B can comprise one outermost layer of the printed laminate such that when formed into a pouch, layer 7 comprises the layer furthest from the packaged product; and an olefinic polymer or copolymer such as ethylene/alpha olefin copolymer (EAO) can comprise the inner layer 1 of Film A, such that when formed into a pouch, the EAO comprises the layer of the printed laminate closest to the packaged product. In this embodiment, the film can be lap sealed, for example a longitudinal lap seal running the length of the pouch, such that layer 7 of Film B is sealed to the EAO inner layer 1 of Film A. This embodiment provides a longitudinally lap sealed pouch.

Pouches made from the film of the present invention can be fin sealed or lap sealed (typically referring to the longitudinal seal running the length of the pouch) depending on the desired configuration of the finished pouch, the equipment used, and the composition of the innermost and outermost layers of the printed laminate. In the case of fin seals, where the same layer 1 is sealed to itself at the longitudinal edges of the material web, in one embodiment the outer layer that will come together to form the fin seal comprises a material with a melting point of at least 125°C, e.g. high density polyethylene or propylene homopolymer.

Alternatively, both layer 1 of Film A and 7 of Film B can comprise the blend of amorphous and semicrystalline materials described above. In this embodiment, the film can be either lap sealed or fin sealed to form a pouch.

Additional materials that can be incorporated into one or both of the outer layers of the printed laminate, and in other layers of the printed laminate as appropriate, include antiblock agents, slip agents, antifog agents, fillers, pigments, dyestuffs, antioxidants, stabilizers, processing aids, plasticizers, fire retardants, UV absorbers, etc.

### Examples

Several film structures in accordance with the invention are identified below. Materials are as follows.

**Table 1**

| Resin Identification | | | |
|---|---|---|---|
| Material Code | Tradename Or Designation | Source(s) | Melting Point^{a} |
| AB1 | 502835™ | Ampacet | 135°C |
| PE1 | ELITE™ 5400 G | Dow | 123°C |
| PE2 | DOW™2045.04 | Dow | 122°C |
| PE3 | 662I™ | Dow | 108°C |
| PE4 | T50-200-178™ | Ineos | 132°C |
| PE5 | ELITE™ 5500 G | Dow | 121°C |
| AD1 | PX3236™ | Equistar | 125°C |
| AD2 | PX3410™ | Equistar | 124°C |
| PA1 | ULTRAMID™B40LN01 | BASF | 220°C |
| OB1 | EVAL™ L171 B | Evalca | 191°C |
| OB2 | SOARNOL™ AT4403 | Nippon Gohsei | 164°C |
| EN1 | TOPAS 8007 F-04™ | Ticona | ----- |

| | | | |
|---|---|---|---|
| ^{a}Melting Point of resin or masterbatch (by differential scanning calorimetry) AB1 is a masterbatch having about 80%, by weight of the masterbatch, of FORTIFLEX™ T60-500-119, a high density polyethylene with a density of 0.961 grams/cc; about 16%, by weight of the masterbatch, of SILTON JC30A™, a sodium calcium aluminum silicate, NaCaAl(Si₂O₇); and about 4 w%, by weight of the masterbatch, of CLEAR Block80™ talc, an antiblocking agent. PE1 is an IPN resin with a density of 0.917 grams/cc, and a melt flow index of 1.1 grams/10 minutes at 190°C / 02.16 kg (Condition E). PE2 is an ethylene/octene-1 copolymer with a 6.5 weight % octene content, and a density of 0.920 grams/cc. PE3 is a low density polyethylene resin. PE4 is an ethylene/1-butene copolymer resin with a density of 0.952 grams/cc. PE5 is an IPN resin with a density of 0.914 grams/cc, and a melt flow index of 1.5 grams/10 minutes at 190°C / 02.16 kg (Condition E). AD1 is a maleic anhydride-modified linear low density polyethylene with a density of 0.921 grams/cc. AD2 is a maleic anhydride-modified linear low density polyethylene. PA1 is a nylon 6 (poly(caprolactam)). OB1 is an ethylene/vinyl alcohol copolymer with less than 30 mole% ethylene. OB2 is an ethylene/vinyl alcohol copolymer with more than 40 mole% ethylene. EN1 is an ethylene/norbornene copolymer with a norbornene content of 36 mole % of the copolymer and a Tg of 80°C. | | | |

The following films are made by otherwise conventional coextrusion techniques. These films can be used as Film A or Film B of the printed laminate of the invention.

**Table 2**

| EX. | Layer 1 | Layer 2 | Layer 3 | Layer 4 | Layer 5 | Layer 6 | Layer 7 |
|---|---|---|---|---|---|---|---|
| 1 | 70% PE2 + | AD2 | PA1 | OB1 | PA1 | AD2 | 60% EN1 + |
| | 22% PE3 + | | | | | | 15% PE4 + |
| | 8% AB1 | | | | | | 20% PE1 + |
| | | | | | | | 5% AB1 |
| mm | 0.024 | 0.0036 | 0.0071 | 0.0071 | 0.0071 | 0.014 | 0.0071 |
| (mils) | (0.96) | (0.14) | (0.28) | (0.28) | (0.28) | (0.55) | (0.28) |
| 2 | 70% PE2 + | AD1 | PA1 | 80% | PA1 | 70% | 60% EN1 + |
| | 22% PE3 + | | | OB1 + | | AD1 + | 15% PE4 + |
| | 8% AB1 | | | 20% | | 30% | 20% PE1 + |
| | | | | OB2 | | PE2 | 5% AB1 |
| mm | 0.022 | 0.0033 | 0.0064 | 0.0064 | 0.0064 | 0.013 | 0.0064 |
| (mils) | (0.88) | (0.13) | (0.25) | (0.25) | (0.25) | (0.50) | (0.25) |
| 3 | 70% PE2 + | AD1 | PA1 | AD1 | PA1 | 70% | 60% EN1 + |
| | 22% PE3 + | | | | | AD1 + | 15% PE4 + |
| | 8% AB1 | | | | | 0% | 20% PE1 + |
| | | | | | | PE2 | 5% AB1 |
| mm | 0.024 | 0.0036 | 0.0071 | 0.0071 | 0.0071 | 0.014 | 0.0071 |
| (mils) | (0.96) | (0.14) | (0.28) | (0.28) | (0.28) | (0.55) | (0.28) |
| 4 | 70% PE2 + | AD2 | PA1 | OB1 | PA1 | AD2 | 30% EN1 + |
| | 22% PE3 + | | | | | | 25% PE4 + |
| | 8% AB1 | | | | | | 40% PE1 + |
| | | | | | | | 5% AB1 |
| mm | 0.024 | 0.0036 | 0.0071 | 0.0071 | 0.0071 | 0.014 | 0.0071 |
| (mils) | (0.96) | (0.14) | (0.28) | (0.28) | (0.28) | (0.55) | (0.28) |
| 5 | 70% PE2 + | AD2 | PA1 | PA1 | PA1 | AD2 | 60% EN1 + |
| | 22% PE3 + | | | | | | 15% PE4 + |
| | 8% AB1 | | | | | | 20% PE1 + |
| | | | | | | | 5% AB1 |
| mm | 0.024 | 0.0036 | 0.0071 | 0.0071 | 0.0071 | 0.014 | 0.0071 |
| (mils) | (0.96) | (0.14) | (0.28) | (0.28) | (0.28) | (0.55) | (0.28) |

Laminates in accordance with the invention are made from the films of Table 2 by otherwise conventional printing and lamination techniques, to produce the following laminates shown in Table 3:

**Table 3**

| EX. | Composition of Film A | Trap print image | Composition of Film B | Total laminate Thickness |
|---|---|---|---|---|
| 6 | Film of Ex.1 | Trap | Film of Ex. 1 | |
| mm | 0.070 | print | 0.070 | 140 micrometers |
| (mils) | (2.77) | image | (2.77) | (5.5 mil) |
| 7 | Film of Ex.2 | Trap | Film of Ex. 2 | |
| mm | 0.065 | print | 0.065 | 127 micrometers |
| (mils) | (2.50) | image | (2.50) | (5.0 mil) |

| | | | | |
|---|---|---|---|---|
| 8 | Film of Ex.3 | Trap | Film of Ex. 3 | |
| mm | 0.070 | print | 0.070 | 140 micrometers |
| (mils) | (2.77) | image | (2.77) | (5.5 mil) |
| 9 | Film of Ex.4 | Trap | Film of Ex. 4 | |
| mm | 0.070 | print | 0.070 | 140 micrometers |
| (mils) | (2.77) | image | (2.77) | (5.5 mil) |
| 10 | Film of Ex.5 | Trap | Film of Ex. 5 | |
| mm | 0.070 | print | 0.070 | 140 micrometers |
| (mils) | (2.77) | image | (2.77) | (5.5 mil) |
| 11 | Film of Ex.3 | Trap | Film of Ex.3 | |
| mm | 0.025 | print | 0.025 | 50 micrometers |
| (mils) | (1) | image | (1) | (2.0 mil) |
| 12 | Film of Ex.1 | Trap | Film of Ex.1 | |
| mm | 0.152 | print | 0.152 | 305 micrometers |
| (mils) | (6.0) | image | (6.0) | (12.0 mil) |
| 13 | Film of Ex.2 | Trap | Film of Ex.2 | |
| mm | 0.152 | print | 0.152 | 305 micrometers |
| (mils) | (6.0) | image | (6.0) | (12.0 mil) |
| 14 | Film of Ex.1 | Trap | Film of Ex.1 | |
| mm | 0.025 | print | 0.025 | 50 micrometers |
| (mils) | (1) | image | (1) | (2 mil) |
| 15 | Film of Ex.2 | Trap | Film of Ex.2 | |
| mm | 0.025 | print | 0.025 | 50 micrometers |
| (mils) | (1) | image | (1) | (2 mil) |
| 16 | Film of Ex.1 | Trap | Film of Ex.1 | |
| mm | 0.038 | print | 0.038 | 50 micrometers |
| (mils) | (1.5) | image | (1.5) | (3.0 mil) |
| 17 | Film of Ex.2 | Trap | Film of Ex.2 | |
| mm | 0.038 | print | 0.038 | 76 micrometers |
| (mils) | (1.5) | image | (1.5) | (3.0 mil) |
| 18 | Film of Ex.1 | Trap | Film of Ex.1 | |
| mm | 0.160 | print | 0.160 | 320 micrometers |
| (mils) | (6.3) | image | (6.3) | (12.6 mil) |
| 19 | Film of Ex.2 | Trap | Film of Ex.2 | |
| mm | 0.160 | print | 0.160 | 320 micrometers |
| (mils) | (6.3) | image | (6.3) | (12.6 mil) |
| 20 | Film of Ex.3 | Trap | Film of Ex.3 | |
| mm | 0.160 | print | 0.160 | 320 micrometers |
| (mils) | (6.3) | image | (6.3) | (12.6 mil) |
| 21 | Film of Ex.1 | Trap | Film of Ex.1 | |
| mm | 0.051 | print | 0.051 | 102 micrometers |
| (mils) | (2) | image | (2) | (4 mil) |
| 22 | Film of Ex.2 | Trap | Film of Ex.2 | |
| mm | 0.051 | print | 0.051 | 102 micrometers |
| (mils) | (2) | image | (2) | (4 mil) |
| 23 | Film of Ex.3 | Trap | Film of Ex.3 | |
| mm | 0.051 | print | 0.051 | 102 micrometers |
| (mils) | (2) | image | (2) | (4 mil) |
| 24 | Film of Ex.1 | Trap | Film of Ex.1 | |
| mm | 0.076 | print | 0.076 | 152 micrometers |
| (mils) | (3) | image | (3) | (6 mil) |
| 25 | Film of Ex.2 | Trap | Film of Ex.2 | |
| mm | 0.076 | print | 0.076 | 152 micrometers |
| (mils) | (3) | image | (3) | (6 mil) |
| 26 | Film of Ex.3 | Trap | Film of Ex.3 | |
| mm | 0.076 | print | 0.076 | 152 micrometers |
| (mils) | (3) | image | (3) | (6 mil) |
| 27 | Film of Ex.1 | Trap | Film of Ex.1 | |
| mm | 0.102 | print | 0.102 | 203 micrometers |
| (mils) | (4) | image | (4) | (8 mil) |
| 28 | Film of Ex.2 | Trap | Film of Ex.2 | |
| mm | 0.102 | print | 0.102 | 203 micrometers |
| (mils) | (4) | image | (4) | (8 mil) |
| 29 | Film of Ex.3 | Trap | Film of Ex.3 | |
| mm | 0.102 | print | 0.102 | 203 micrometers |
| (mils) | (4) | image | (4) | (8 mil) |
| 30 | Film of Ex.1 | Trap | Film of Ex.1 | |
| mm | 0.127 | print | 0.127 | 254 micrometers |
| mils | (5) | image | (5) | (10 mil) |
| 31 | Film of Ex.2 | Trap | Film of Ex.2 | |
| mm | 0.127 | print | 0.127 | 254 micrometers |
| (mils) | (5) | image | (5) | (10 mil) |
| 32 | Film of Ex.3 | Trap | Film of Ex.3 | |
| mm | 0.127 | print | 0.127 | 254 micrometers |
| (mils) | (5) | image | (5) | (10 mil) |

| | | | | |
|---|---|---|---|---|
| Notes to Tables 2 and 3: 1. Layer 1 of Film A functions as a sealant layer, or food contact layer, typically the layer closest to the article to be packaged; layer 7 of Film B as a skin or outer layer, typically the layer farthest from the article to be packaged. 2 "Ex." refers to an example of the invention, or a component of the invention. 3. The thickness of each layer or film, in mils (one mil = .001 inches) is indicated, with conversion of total film thickness to micrometers in parentheses in the right hand column. Thicknesses are approximate. 4. Examples 1, 3 to 6, and 8 to 32 are prophetic examples. Examples 2 and 7 were made. 5. Total laminate thickness of each of the Examples of Table 3 ignores the thickness of the adhesive bonding Films A and B together. A typical thickness is about 2.5 micrometers. | | | | |

By way of example, and with reference to Examples 1 and 6, a laminate in accordance with the invention has the following structure. The first listed layer is the outermost layer of the laminate in a pouch made from the laminate, and the layer having an outer surface exposed to the outside atmosphere. This outer surface is the outermost surface of the laminate. The last listed layer is the innermost layer of the laminate, in a pouch made from the laminate, and the layer having a surface in contact with the food or other product contained in a pouch made from the laminate. This surface is the innermost surface of the laminate.

| | |
|---|---|
| Layer 7 | 60% EN1 + 15% PE4 + 20% PE1 + 5% AB1 |
| Layer 6 | AD2 |
| Layer 5 | PA1 |
| Layer 4 | OB1 |
| Layer 3 | PA1 |
| Layer 2 | AD2 |
| Layer 1 | 70% PE2 + 22% PE3 + 8% AB |

| | *Printed image* Adhesive |
|---|---|
| Layer 7 | 60% EN1 + 15% PE4 + 20% PE1 + 5% AB1 |
| Layer 6 | AD2 |
| Layer 5 | PA1 |
| Layer 4 | OB1 |
| Layer 3 | PA1 |
| Layer 2 | AD2 |
| Layer 1 | 70% PE2 + 22% PE3 + 8% AB |

The laminate includes a printed image between the first and second films, and also includes an adhesive that bonds the first and second films together.

As shown, the image can be considered to be reverse printed onto the inside surface of Film B, i.e. the layer, shown adjacent the printed image, having the construction 70% PE2 + 22% PE3 + 8% AB.

In an alternative embodiment of the invention, the image can be printed on the outermost layer of Film A, i.e. the layer having the construction 60% EN1 + 15% PE4 + 20% PE1 + 5% AB1. Adhesive can be applied to that layer or the inner surface of Film B. This embodiment can be shown as follows:

| | |
|---|---|
| Layer 7 | 60% EN1 + 15% PE4 + 20% PE1 + 5% AB1 |
| Layer 6 | AD2 |
| Layer 5 | PA1 |
| Laver 4 | OB1 |
| Layer 3 | PA1 |
| Layer 2 | AD2 |
| Layer 1 | 70% PE2 + 22% PE3 + 8% AB |

| | Adhesive *Printed Image* |
|---|---|
| Layer 7 | 60% EN1 + 15% PE4 + 20% PE1 + 5% AB1 |
| Layer 6 | AD2 |
| Layer 5 | PA1 |
| Layer 4 | OB1 |
| Layer 3 | PA1 |
| Layer 2 | AD2 |
| Layer 1 | 70% PE2 + 22% PE3 + 8% AB |

Thus, the innermost layer of Film B may provide the surface upon which a printed image (e.g., printed information) is applied, in which case the innermost layer provides a surface that is compatible with the selected print ink system. Further, the innermost layer of Film B provides the inside surface to which Film A may be directly laminated.

Alternatively, the outermost layer of Film A may provide the surface upon which a printed image (e.g., printed information) is applied, in which case the layer provides a surface that is compatible with the selected print ink system. Further, the outermost layer of Film A provides the outside surface to which the Film B may be directly laminated.

### Additional Film Examples

The following additional films, described in Table 4, were made by otherwise conventional coextrusion techniques.

**Table 4**

| EX. | Layer 1 | Layer 2 | Layer 3 | Layer 4 | Layer 5 | Layer 6 | Layer 7 |
|---|---|---|---|---|---|---|---|
| 33 | 70% PE2 | AD1 | PA1 | 80% | PA1 | 70% | 60% EN1 + |
| | + | | | OB1 + | | AD1 + | 15% PE4 + |
| 2141 | 22% PE3 | | | 20% | | 30% | 20% PE1 + |
| | + | | | OB2 | | PE2 | 5% AB1 |
| Film A | 8% AB1 | 0.0089 | 0.0089 | 0.0089 | 0.0089 | 0.0132 | 0.0089 |
| mm (Mils) | | (0.35) | (0.35) | (0.35) | (0.35) | (0.52) | (0.35) |
| Film B | 1.23 | 0.0038 | 0.0038 | 0.0038 | 0.0038 | 0.0058 | 0.0038 |
| mm (Mils) | 0.53 | (0.15) | (0.15) | (0.15) | (0.15) | (0.23) | (0.15) |
| | | | | | | | |
| | | | | | | | |
| | | | | | | | |
| | | | | | | | |
| 34 | 72% PE5 | 70% | PA1 | 80% | PA1 | 70% | 60% EN1 + |
| | + | AD1 + | | OB1 + | | AD1 + | 15% PE4 + |
| 2518 | 20% PE3 | 30% | | 20% | | 30% | 20% PE5 + |
| | + | PE5 | | OB2 | | PE5 | 5% AB1 |
| Film A | 8% AB1 | 0.0089 | 0.0089 | 0.0089 | 0.0089 | 0.0132 | 0.0089 |
| mm (Mils) | 0.0312 | (0.35) | (0.35) | (0.35) | (0.35) | (0.52) | (0.35) |
| Film B | 1.23 | 0.0038 | 0.0038 | 0.0038 | 0.0038 | 0.0058 | 0.0038 |
| mm(Mils) | 0.0135 | (0.15) | (0.15) | (0.15) | (0.15) | (0.23) | (0.15) |
| | (0.53) | | | | | | |
| 35 2519 | 64% PE5 | AD1 | PA1 | 80% | PA1 | 70% | 60% EN1 + |
| | + | | | OB1 + | | AD1 + | 15% PE4 + |
| | 20% PE3 | | | 20% | | 30% | 20% PE5 + |
| | + | | | OB2 | | PE5 | 5% AB1 |
| Film A | 10% EN1 | 0.0089 | 0.0089 | 0.0089 | 0.0089 | 0.0132 | 0.0089 |
| mm (Mils) | + | (0.35) | (0.35) | (0.35) | (0.35) | (0.52) | (0.35) |
| | 6% AB1 | | | | | | |
| Film B | 0.0312 | 0.0038 | 0.0038 | 0.0038 | 0.0038 | 0.0058 | 0.0038 |
| mm (Mils) | (1.23) | (0.15) | (0.15) | (0.15) | (0.15) | (0.23) | (0.15) |
| | 0.0135 | | | | | | |
| | (0.53) | | | | | | |

Laminates in accordance with the invention are made from the films of Table 4 by otherwise conventional printing and lamination techniques, to produce the following laminates shown in Table 5. For each of Examples 33 to 35, a film of 3.5 mils thickness (Film A) was made, having the indicated formulation for each layer; and for each of Examples 33 to 35, a film of 0.0381 mm (1.5 mils) thickness (Film B) was made, having the indicated formulation for each layer. Film B of each example was trap printed, and laminated, using a polyurethane adhesive, to Film A of each of Examples 33 to 35 respectively. The resulting laminate structures were:

**Table 5**

| EX. | Composition of Film A | Trap print image | Composition of Film B | Total laminate Thickness in mils |
|---|---|---|---|---|
| 36 | Film of Ex.33 | Trap | Film of Ex. 33 | |
| mm | 0.0889 | print | 0.0381 | 127 micrometers |
| (mils) | (3.5) | image | (1.5) | (5.0 mil) |
| 37 | Film of Ex.34 | Trap | Film of Ex. 34 | |
| mm | 0.0889 | print | 0.0381 | 127 micrometers |
| (mils) | (3.5) | image | (1.5) | (5.0 mil) |
| 38 | Film of Ex.35 | Trap | Film of Ex. 35 | |
| mm | 0.0889 | print | 0.0381 | 127 micrometers |
| (mils) | (3.5) | image | (1.5) | (5.0 mil) |

| | | | | |
|---|---|---|---|---|
| Notes to Tables 4 and 5: 1. Layer 1 of Film A functions as a sealant layer, or food contact layer, typically the layer closest to the article to be packaged; layer 7 of Film B as a skin or outer layer, typically the layer farthest from the article to be packaged. Thus, the sealant layer 1 of the 0.0889 mm (3.5 mil) film (Film A) becomes the sealant of the final printed laminate, and the skin layer 7 of the 0.0381 mm (1.5 mil) printed film (Film B) becomes the skin layer of the final printed laminate. 2 "Ex." refers to an example of the invention, or a component of the invention. 3. The thickness of each layer or film, in mils (one mil = .001 inches) is indicated, with conversion of total film thickness to micrometers in parentheses in the right hand column. Thicknesses are approximate. 4. Film Examples 33 to 35 were made. Laminate Examples 36 to 38 were made. 5. Total laminate thicknesses of each of the Examples of Table 5 ignore the thickness of the adhesive bonding Films A and B together. A typical thickness of the adhesive is about 2.5 micrometers. | | | | |

### Trap Printed Image

A printed image is disposed (i.e., trap printed) on Film A or Film B at the interface between the outside surface of Film A and the inside surface of Film B. This may be accomplished by printing one or more images on one or both of these surfaces before laminating the films together with adhesive, so that upon lamination the printed image(s) is/are "trapped" between the two films. In one embodiment, the printed image may be "reverse trap printed" by printing the image onto the inside surface of Film B.

A process for making the printed sterilizable laminate in accordance with one embodiment of the invention includes making Film A, making Film B, applying a lamination adhesive such as polyurethane to the outside surface of Film A, reverse printing the inside surface of Film B with the desired printed image, and bringing Films A and B together in a conventional lamination step to create the final sterilizable laminate. The exact sequence of steps can be varied from that described herein, provided the resulting laminate is trap printed as described.

The trap printed image is visible through a relatively transparent Film B to provide information to the viewer, e.g. the wholesale manufacturer, food processor, institutional or consumer purchaser, etc. of the filled aseptic pouch made from the laminate of the invention. The laminate may include a plurality of repeating printed images for each package (i.e., "scatter print") or the printed image may require registration (i.e., "registered print"). To form the printed image, one or more layers and/or patterns of ink are printed onto the film surface to be printed. The ink is selected to have acceptable ink adhesion, appearance, and heat resistance once printed on the film. The film may be printed by any suitable method, such as rotary screen, gravure, or flexographic techniques. Inks and processes for printing on plastic films are known to those of skill in the art. See, for example, Leach & Pierce, The Printing Ink Manual, (5th ed., Kluwer Academic Publishers, 1993).

To improve the adhesion of the ink to the outside surface of Film A, or the inside surface of Film B, the relevant surface may be treated or modified before printing. Suitable surface treatments and modifications include any of:
i) mechanical treatments, such as corona treatment, plasma treatment, and flame treatment, and
ii) primer treatment.

Surface treatments and modifications are known to those of skill in the art. The ink system should be capable of withstanding, without diminished performance, the temperature ranges to which the trap printed image will be exposed during lamination, sterilization, heat sealing (during pouch production), packaging (pouch filling), distribution, etc.

The films can be laminated together, after printing, by suitable and conventional lamination techniques, including the use of conventional lamination adhesives, such as polyurethane adhesives, to bind the films together with the printed image now trapped between them.

In one embodiment, the surface of the film (Film A or Film B) to be printed can be treated by corona treatment or other suitable treatment, e.g. flame treatment, to prepare the surface for printing and lamination. The "mating" surface to which the printed surface will be adhered by lamination adhesive is also in one embodiment treated by corona treatment or other suitable treatment, e.g. flame treatment, to prepare the mating surface for printing and lamination.

In one embodiment, only the film surfaces to be laminated together (i.e. layer 7 of Film A, and layer 1 of Film B) are treated by corona treatment or other suitable treatment. In this embodiment, the other film surfaces, i.e. the film surfaces that will ultimately comprise the outside surfaces of the final laminate (i.e. layer 1 of Film A, and layer 7 of Film B) are not corona treated, or otherwise treated, and each comprise a non-treated or a non-corona treated surface.

Films A and B in one embodiment are identical in composition, layer thickness, and total thickness.

In alternative embodiments of the invention, Films A and B can vary from one another with respect to one or more of the following variables:
- the choice of resins for corresponding layers (e.g. layer 7 of each film can be made from different amorphous cyclic olefin copolymers);
- the thickness of corresponding layers (e.g. layer 7 of Films A and B can have thicknesses different from one another);
- blend ratios of corresponding layers (e.g. layer 7 of Films A and B can different from one another with respect to the relative amounts of amorphous cyclic olefin copolymer and semicrystalline olefinic polymer); and
- total film thickness.

Film A and Film B can each have a thickness of from 20 to 160 or 25 to 160 micrometers, such as from 30 to 155 micrometers, 40 to 150 micrometers, from 45 to 145 micrometers, 50 to 140 micrometers, 60 to 130 micrometers, 70 to 120 micrometers, 80 to 110 micrometers, and 90 to 100 micrometers, such as from 35 to 90 micrometers, 40 to 80 micrometers, from 45 to 75 micrometers, 50 to 70 micrometers, 55 to 65 micrometers, 40 to 60 micrometers, 60 to 80 micrometers, and 50 to 70 micrometers.

In some embodiments, Film B has a thickness that is from 20% to 60% of the thickness of Film A; e.g. from 30% to 45%, or 35% to 40%, of the thickness of Film B.

Film B may have a thickness of less than 50% the thickness of film A.

The total laminate thickness in accordance with the invention is in some embodiments less than 130 micrometers, such as less than 125, 120, 110, and 100 micrometers.

Laminates in accordance with the invention are made from the films of Table 4 by otherwise conventional printing and lamination techniques, to produce the following laminates shown in Table 6:

**Table 6**

| EX. | Composition of Film A | Trap print image | Composition of Film B | Total laminate Thickness in mils |
|---|---|---|---|---|
| 39 | Film of Ex.33 | Trap | Film of Ex.33 | |
| mm | 0.106 | print | 0.021 | 127 micrometers |
| (mils) | (4.17) | image | (0.83) | (5.0 mil) |
| 40 | Film of Ex.34 | Trap | Film of Ex.34 | |
| mm | 0.106 | print | 0.021 | 127 micrometers |
| (mils) | (4.17) | image | (0.83) | (5.0 mil) |
| 41 | Film of Ex.35 | Trap | Film of Ex.35 | |
| mm | 0.106 | print | 0.021 | 127 micrometers |
| (mils) | (4.17) | image | (0.83) | (5.0 mil) |
| 42 | Film of Ex.33 | Trap | Film of Ex. 33 | |
| mm | 0.102 | print | 0.025 | 127 micrometers |
| (mils) | (4.0) | image | (1.0) | (5.0 mil) |
| 43 | Film of Ex.34 | Trap | Film of Ex. 34 | |
| mm | 0.102 | print | 0.025 | 127 micrometers |
| (mils) | (4.0) | image | (1.0) | (5.0 mil) |
| 44 | Film of Ex.35 | Trap | Film of Ex. 35 | |
| mm | 0.102 | print | 0.025 | 127 micrometers |
| (mils) | (4.0) | image | (1.0) | (5.0 mil) |
| 45 | Film of Ex.33 | Trap | Film of Ex.33 | |
| mm | 0.098 | print | 0.029 | 127 micrometers |
| (mils) | (3.84) | image | (1.16) | (5.0 mil) |
| 46 | Film of Ex.34 | Trap | Film of Ex.34 | |
| mm | 0.098 | print | 0.029 | 127 micrometers |
| (mils) | (3.84) | image | (1.16) | (5.0 mil) |
| 47 | Film of Ex.35 | Trap | Film of Ex.35 | |
| mm | 0.098 | print | 0.029 | 127 micrometers |
| (mils) | (3.84) | image | (1.16) | (5.0 mil) |
| 48 | Film of Ex.33 | Trap | Film of Ex.33 | |
| mm | 0.094 | print | 0.033 | 127 micrometers |
| (mils) | (3.7) | image | (1.3) | (5.0 mil) |
| 49 | Film of Ex.34 | Trap | Film of Ex.34 | |
| mm | 0.094 | print | 0.033 | 127 micrometers |
| (mils) | (3.7) | image | (1.3) | (5.0 mil) |
| 50 | Film of Ex.35 | Trap | Film of Ex.35 | |
| mm | 0.094 | print | 0.033 | 127 micrometers |
| (mils) | (3.7) | image | (1.3) | (5.0 mil) |
| 51 | Film of Ex.33 | Trap | Film of Ex.33 | |
| mm | 0.091 | print | 0.036 | 127 micrometers |
| (mils) | (3.57) | image | (1.43) | (5.0 mil) |
| 52 | Film of Ex.34 | Trap | Film of Ex.34 | |
| mm | 0.091 | print | 0.036 | 127 micrometers |
| (mils) | (3.57) | image | (1.43) | (5.0 mil) |
| 53 | Film of Ex.35 | Trap | Film of Ex.35 | |
| mm | 0.091 | print | 0.036 | 127 micrometers |
| (mils) | (3.57) | image | (1.43) | (5.0 mil) |
| 54 | Film of Ex.33 | Trap | Film of Ex.33 | |
| mm | 0.088 | print | 0.039 | 127 micrometers |
| (mils) | (3.45) | image | (1.55) | (5.0 mil) |
| 55 | Film of Ex.34 | Trap | Film of Ex.34 | |
| mm | 0.088 | print | 0.039 | 127 micrometers |
| (mils) | (3.45) | image | (1.55) | (5.0 mil) |
| 56 | Film of Ex.35 | Trap | Film of Ex.35 | |
| mm | 0.088 | print | 0.039 | 127 micrometers |
| (mils) | (3.45) | image | (1.55) | (5.0 mil) |
| 57 | Film of Ex.33 | Trap | Film of Ex.33 | |
| mm | 0.085 | print | 0.042 | 127 micrometers |
| (mils) | (3.33) | image | (1.67) | (5.0 mil) |
| 58 | Film of Ex.34 | Trap | Film of Ex.34 | |
| mm | 0.085 | print | 0.042 | 127 micrometers |
| (mils) | (3.33) | image | (1.67) | (5.0 mil) |
| 59 | Film of Ex.35 | Trap | Film of Ex.35 | |
| mm | 0.085 | print | 0.042 | 127 micrometers |
| (mils) | (3.33) | image | (1.67) | (5.0 mil) |
| 60 | Film of Ex.33 | Trap | Film of Ex.33 | |
| mm | 0.082 | print | 0.045 | 127 micrometers |
| (mils) | (3.23) | image | (1.77) | (5.0 mil) |
| 61 | Film of Ex.34 | Trap | Film of Ex.34 | |
| mm | 0.082 | print | 0.045 | 127 micrometers |
| (mils) | (3.23) | image | (1.77) | (5.0 mil) |
| 62 | Film of Ex.35 | Trap | Film of Ex.35 | |
| mm | 0.082 | print | 0.045 | 127 micrometers |
| (mils) | (3.23) | image | (1.77) | (5.0 mil) |
| 63 | Film of Ex.33 | Trap | Film of Ex.33 | |
| mm | 0.080 | print | 0.047 | 127 micrometers |
| (mils) | (3.13) | image | (1.87) | (5.0 mil) |
| 64 | Film of Ex.34 | Trap | Film of Ex.34 | |
| mm | 0.080 | print | 0.047 | 127 micrometers |
| (mils) | (3.13) | image | (1.87) | (5.0 mil) |
| 65 | Film of Ex.35 | Trap | Film of Ex.35 | |
| mm | 0.080 | print | 0.047 | 127 micrometers |
| (mils) | (3.13) | image | (1.87) | (5.0 mil) |
| 66 | Film of Ex.33 | Trap | Film of Ex.33 | |
| mm | 0.212 | print | 0.042 | 254 micrometers |
| (mils) | (8.33) | image | (1.67) | (10.0 mil) |
| 67 | Film of Ex.34 | Trap | Film of Ex.34 | |
| mm | 0.212 | print | 0.042 | 254 micrometers |
| (mils) | (8.33) | image | (1.67) | (10.0 mil) |
| 68 | Film of Ex.35 | Trap | Film of Ex.35 | |
| mm | 0.212 | print | 0.042 | 254 micrometers |
| (mils) | (8.33) | image | (1.67) | (10.0 mil) |
| 67 | Film of Ex.33 | Trap | Film of Ex.33 | |
| mm | 0.203 | print | 0.051 | micrometers 254 |
| (mils) | (8.0) | image | (2.0) | (10.0 mil) |
| 68 | Film of Ex.34 | Trap | Film of Ex.34 | |
| mm | 0.203 | print | 0.051 | micrometers 254 |
| (mils) | (8.0) | image | (2.0) | (10.0 mil) |
| 69 | Film of Ex.35 | Trap | Film of Ex.35 | |
| mm | 0.203 | print | 0.051 | 254 micrometers |
| (mils) | (8.0) | image | (2.0) | (10.0 mil) |
| 70 | Film of Ex.33 | Trap | Film of Ex.33 | |
| mm | 0.195 | print | 0.059 | 254 micrometers |
| (mils) | (7.69) | image | (2.31) | (10.0 mil) |
| 71 | Film of Ex.34 | Trap | Film of Ex.34 | |
| mm | 0.195 | print | 0.059 | 254 micrometers |
| (mils) | (7.69) | image | (2.31) | (10.0 mil) |
| 72 | Film of Ex.35 | Trap | Film of Ex.35 | |
| mm | 0.195 | print | 0.059 | 254 micrometers |
| (mils) | (7.69) | image | (2.31) | (10.0 mil) |
| 73 | Film of Ex.33 | Trap | Film of Ex.33 | |
| mm | 0.188 | print | 0.066 | 254 micrometers |
| (mils) | (7.41) | image | (2.59) | (10.0 mil) |
| 74 | Film of Ex.34 | Trap | Film of Ex.34 | |
| mm | 0.188 | print | 0.066 | 254 micrometers |
| (mils) | (7.41) | image | (2.59) | (10.0 mil) |
| 75 | Film of Ex.35 | Trap | Film of Ex.35 | |
| mm | 0.188 | print | 0.066 | 254 micrometers |
| (mils) | (7.41) | image | (2.59) | (10.0 mil) |
| 76 | Film of Ex.33 | Trap | Film of Ex.33 | |
| mm | 0.181 | print | 0.073 | 254 micrometers |
| (mils) | (7.14) | image | (2.86) | (10.0 mil) |
| 77 | Film of Ex.34 | Trap | Film of Ex.34 | |
| mm | 0.181 | print | 0.073 | 254 micrometers |
| (mils) | (7.14) | image | (2.86) | (10.0 mil) |
| 78 | Film of Ex.35 | Trap | Film of Ex.35 | |
| mm | 0.181 | print | 0.073 | 254 micrometers |
| (mils) | (7.14) | image | (2.86) | (10.0 mil) |
| 79 | Film of Ex.33 | Trap | Film of Ex.33 | |
| mm | 0.175 | print | 0.079 | 254 micrometers |
| (mils) | (6.90) | image | (3.10) | (10.0 mil) |
| 80 | Film of Ex.34 | Trap | Film of Ex.34 | |
| mm | 0.175 | print | 0.079 | 254 micrometers |
| (mils) | (6.90) | image | (3.10) | (10.0 mil) |
| 81 | Film of Ex.35 | Trap | Film of Ex.35 | |
| mm | 0.175 | print | 0.079 | 254 micrometers |
| (mils) | (6.90) | image | (3.10) | (10.0 mil) |
| 82 | Film of Ex.33 | Trap | Film of Ex.33 | |
| mm | 0.169 | print | 0.085 | 254 micrometers |
| (mils) | (6.67) | image | (3.33) | (10.0 mil) |
| 83 | Film of Ex.34 | Trap | Film of Ex.34 | |
| mm | 0.169 | print | 0.085 | 254 micrometers |
| (mils) | (6.67) | image | (3.33) | (10.0 mil) |
| 84 | Film of Ex.35 | Trap | Film of Ex.35 | |
| mm | 0.169 | print | 0.085 | 254 micrometers |
| (mils) | (6.67) | image | (3.33) | (10.0 mil) |
| 85 | Film of Ex.33 | Trap | Film of Ex.33 | |
| mm | 0.164 | print | 0.090 | 254 micrometers |
| (mils) | (6.45) | image | (3.55) | (10.0 mil) |
| 86 | Film of Ex.34 | Trap | Film of Ex.34 | |
| mm | 0.164 | print | 0.090 | 254 micrometers |
| (mils) | (6.45) | image | (3.55) | (10.0 mil) |
| 87 | Film of Ex.35 | Trap | Film of Ex.35 | |
| mm | 0.164 | print | 0.090 | 254 micrometers |
| (mils) | (6.45) | image | (3.55) | (10.0 mil) |
| 88 | Film of Ex.33 | Trap | Film of Ex.33 | |
| mm | 0.159 | print | 0.095 | 254 micrometers |
| (mils) | (6.25) | image | (3.75) | (10.0 mil) |
| 89 | Film of Ex.34 | Trap | Film of Ex.34 | |
| mm | 0.159 | print | 0.095 | 254 micrometers |
| (mils) | (6.25) | image | (3.75) | (10.0 mil) |
| 90 | Film of Ex.35 | Trap | Film of Ex.35 | |
| mm | 0.159 | print | 0.095 | 254 micrometers |
| (mils) | (6.25) | image | (3.75) | (10.0 mil) |

All ranges disclosed herein are to be understood to encompass any and all sub-ranges subsumed therein. For example, a range of "40 to 80" can include any and all sub-ranges between (and including) the minimum value of 40 and the maximum value of 80, that is, any and all sub-ranges having a minimum value of equal to or greater than 40 and a maximum value of equal to or less than 80, e.g., 40 to 42.

Those skilled in the art will appreciate, after reviewing the disclosure herein, that thicker films will result in a thicker final, printed laminate that, all other factors be equal, may be more difficult to seal. The present invention makes use of an amorphous cyclic olefin copolymer, such as ethylene norbornene copolymer, or a blend of amorphous cyclic olefin copolymer and semicrystalline olefinic polymer, in layer 7 of Film B. This material exhibits a lower softening point than typical biaxially oriented PET (polyethylene terephthalate) film, or biaxially oriented nylon film. The present invention may thus offer more commercial choices on gauge of the laminate used in aseptic VFFS applications.

The above descriptions are those of embodiments of the invention. All parts and percentages are by weight, unless otherwise indicated or well understood in the art. Except in the claims and the specific examples, or where otherwise expressly indicated, all numerical quantities in this description indicating amounts of material, reaction conditions, use conditions, molecular weights, and/or number of carbon atoms, and the like, are to be understood as modified by the word "about" in describing the broadest scope of the invention. Any reference to an item in the disclosure or to an element in the claim in the singular using the articles "a," "an," "the," or "said" is not to be construed as limiting the item or element to the singular unless expressly so stated. All references to ASTM tests are to the most recent, currently approved, and published version of the ASTM test identified, as of the priority filing date of this application. Each such published ASTM test method is incorporated herein in its entirety by reference.

In at least some embodiments of the invention, individual Films A and B, and the final laminate produced from these films, is characterized by an elongation at yield (ASTM D 882) of less than 15% in each of the longitudinal and transverse directions, and/or a free shrink (ASTM D 2732) at 200°F of less than 8% in each of the longitudinal and transverse directions.

## Claims

1. A printed sterilizable laminate for aseptic packaging comprising:
a) a first coextruded multilayer film comprising
i) a core layer, having a first major surface and a second major surface, comprising ethylene vinyl alcohol copolymer, polymeric adhesive, or polyamide;
ii) a first intermediate layer, adjacent the first major surface of the core layer, comprising polyamide;
iii) a second intermediate layer, adjacent the second major surface of the core layer, comprising polyamide;
iv) an outer layer comprising amorphous cyclic olefin copolymer, or a blend of amorphous cyclic olefin copolymer and at least one olefinic copolymer;
v) an inner layer comprising an olefinic copolymer, or a blend of an olefinic copolymer and amorphous cyclic olefin copolymer,
vi) a first tie layer adhering the first intermediate layer to the outer layer, and
vii) a second tie layer adhering the second intermediate layer to the inner layer,
the first coextruded multilayer film having an inside surface and an outside surface;
b) a second coextruded multilayer film comprising
i) a core layer, having a first major surface and a second major surface, comprising ethylene vinyl alcohol copolymer, polymeric adhesive, or polyamide;
ii) a first intermediate layer, adjacent the first major surface of the core layer, comprising polyamide;
iii) a second intermediate layer, adjacent the second major surface of the core layer, comprising polyamide;
iv) an outer layer comprising amorphous cyclic olefin copolymer, or a blend of amorphous cyclic olefin copolymer and at least one olefinic copolymer;
v) an inner layer comprising an olefinic copolymer, or a blend of an olefinic copolymer and amorphous cyclic olefin copolymer;
vi) a first tie layer adhering the first intermediate layer to the outer layer, and
vii) a second tie layer adhering the second intermediate layer to the inner layer,
the second coextruded multilayer film having an inside surface and an outside surface;
c) a printed image disposed on the outside surface of the first coextruded multilayer film, or the inside surface of the second coextruded multilayer film; and
d) an adhesive that bonds the outer layer of the first coextruded multilayer film to the inner layer of the second coextruded multilayer film.

2. An aseptic package comprising:
a) a sterilized food product, and
b) a sterilized pouch in which the sterilized food product is disposed, the sterilized pouch comprising a printed laminate comprising
i) a first coextruded multilayer film comprising
(a) a core layer, having a first major surface and a second major surface, comprising ethylene vinyl alcohol copolymer, polymeric adhesive, or polyamide;
(b) a first intermediate layer, adjacent the first major surface of the core layer, comprising polyamide;
(c) a second intermediate layer, adjacent the second major surface of the core layer, comprising polyamide;
(d) an outer layer comprising amorphous cyclic olefin copolymer, or a blend of amorphous cyclic olefin copolymer and at least one olefinic copolymer,
(e) an inner layer comprising olefinic copolymer, or a blend of an olefinic copolymer and an amorphous cyclic olefin copolymer;
(f) a first tie layer adhering the first intermediate layer to the outer layer, and
(g) a second tie layer adhering the second intermediate layer to the inner layer,
the first coextruded multilayer film having an inside surface and an outside surface;
ii) a second coextruded multilayer film comprising
(a) a core layer, having a first major surface and a second major surface, comprising ethylene vinyl alcohol copolymer, polymeric adhesive, or polyamide;
(b) a first intermediate layer, adjacent the first major surface of the core layer, comprising polyamide;
(c) a second intermediate layer, adjacent the second major surface of the core layer, comprising polyamide;
(d) an outer layer comprising amorphous cyclic olefin copolymer, or a blend of amorphous cyclic olefin copolymer and at least one olefinic copolymer;
(e) an inner layer comprising an olefinic copolymer, or a blend of an olefinic copolymer and amorphous cyclic olefin copolymer;
(f) a first tie layer adhering the first intermediate layer to the outer layer; and
(g) a second tie layer adhering the second intermediate layer to the inner layer;
the second coextruded multilayer film having an inside surface and an outside surface;
iii) a printed image disposed on the outside surface of the first coextruded multilayer film, or the inside surface of the second coextruded multilayer film; and
iv) an adhesive that bonds the outer layer of the first coextruded multilayer film to the inner layer of the second coextruded multilayer film.

3. The printed sterilizable laminate of claim 1 or the aseptic package of claim 2 wherein the first coextruded multilayer film and the second coextruded multilayer film each have a thickness of from 20 to 160 micrometers.

4. The printed sterilizable laminate of claim 1 or 3 or the aseptic package of claim 2 or 3 wherein the thickness of the second coextruded multilayer film is less than 50% of the thickness of the first coextruded multilayer film.

5. The printed sterilizable laminate of any one of claims 1, 3 or 4 or the aseptic package of any one of claims 2-4 wherein the printed image is disposed on the inside surface of the second coextruded multilayer film.

6. The printed sterilizable laminate of any one of claims 1 or 3-5 or the aseptic package of any one of claims 2-5 wherein the outer layer of the first coextruded multilayer film comprises a blend of amorphous cyclic olefin copolymer and semicrystalline olefinic polymer.

7. The printed sterilizable laminate of any one of claims 1 or 3-6 or the aseptic package of any one of claims 2-6 wherein
a) the outer layer of the first coextruded multilayer film, has a corona-treated surface;
b) the inner layer of the second coextruded multilayer film, has a corona-treated surface;
c) the outer layer of the second coextruded multilayer film, has a non-corona-treated surface; and
d) the inner layer of the first coextruded multilayer film, has a non-corona-treated surface.

8. The printed sterilizable laminate of any one of claims 1 or 3-7 or the aseptic package of any one of claims 2-7 wherein
a) the composition of the outer layer of the first coextruded multilayer film is different from the composition of the inner layer of the second coextruded multilayer film, and
b) the composition of the inner layer of the first coextruded multilayer film is different from the composition of the outer layer of the second coextruded multilayer film.

9. A method of making an aseptic package comprising:
a) sterilizing a food product;
b) sterilizing a printed laminate comprising
i) a first coextruded multilayer film comprising
(a) a core layer, having a first major surface and a second major surface, comprising ethylene vinyl alcohol copolymer, polymeric adhesive, or polyamide;
(b) a first intermediate layer, adjacent the first major surface of the core layer, comprising polyamide;
(c) a second intermediate layer, adjacent the second major surface of the core layer, comprising polyamide;
(d) an outer layer comprising amorphous cyclic olefin copolymer, or a blend of amorphous cyclic olefin copolymer and at least one olefinic copolymer;
(e) an inner layer comprising an olefinic copolymer, or a blend of an olefinic copolymer and amorphous cyclic olefin copolymer;
(f) a first tie layer adhering the first intermediate layer to the outer layer; and
(g) a second tie layer adhering the second intermediate layer to the inner layer;
the first coextruded multilayer film having an inside surface and an outside surface;
ii) a second coextruded multilayer film comprising
(a) a core layer, having a first major surface and a second major surface, comprising ethylene vinyl alcohol copolymer, polymeric adhesive, or polyamide;
(b) a first intermediate layer, adjacent the first major surface of the core layer, comprising polyamide;
(c) a second intermediate layer, adjacent the second major surface of the core layer, comprising polyamide;
(d) an outer layer comprising amorphous cyclic olefin copolymer, or a blend of amorphous cyclic olefin copolymer and at least one olefinic copolymer;
(e) an inner layer comprising an olefinic copolymer, or a blend of an olefinic copolymer and amorphous cyclic olefin copolymer;
(f) a first tie layer adhering the first intermediate layer to the outer layer; and
(g) a second tie layer adhering the second intermediate layer to the inner layer;
the second coextruded multilayer film having an inside surface and an outside surface;
iii) a printed image disposed on the outside surface of the first coextruded multilayer film, or the inside surface of the second coextruded multilayer film; and
iv) an adhesive that bonds the outer layer of the first coextruded multilayer film to the inner layer of the second coextruded multilayer film;
c) forming the sterilized film into a pouch;
d) filling the pouch with the sterilized food product; and
e) sealing the pouch.

10. The method of claim 9 wherein the first coextruded multilayer film and the second coextruded multilayer film each have a thickness of from 20 to 160 micrometers.

11. The method of claim 9 or 10 wherein the thickness of the second coextruded multilayer film is less than 50% of the thickness of the first coextruded multilayer film.

12. The method of claim 9, 10 or 11 wherein the printed image is disposed on the inside surface of the second coextruded multilayer film.

13. The method of any one of claims 9-12 wherein
a) the outer layer of the first coextruded multilayer film, has a corona-treated surface;
b) the inner layer of the second coextruded multilayer film, has a corona-treated surface;
c) the outer layer of the second coextruded multilayer film, has a non-corona-treated surface; and
d) the inner layer of the first coextruded multilayer film, has a non-corona-treated surface.

14. The method of any one of claims 9-13 wherein
a) the composition of the outer layer of the first coextruded multilayer film is different from the composition of the inner layer of the second coextruded multilayer film, and
b) the composition of the inner layer of the first coextruded multilayer film is different from the composition of the outer layer of the second coextruded multilayer film.

## Patentansprüche

1. Bedrucktes sterilisierbares Laminat für aseptisches Verpacken umfassend:
a) eine erste koextrudierte Mehrschichtfolie umfassend
i) eine Kernschicht mit einer ersten Hauptoberfläche und einer zweiten Hauptoberfläche, die Ethylenvinylalkoholcopolymer, polymeren Klebstoff oder Polyamid umfasst,
ii) eine erste Polyamid umfassende Zwischenschicht angrenzend an die erste Hauptoberfläche der Kernschicht,
iii) eine zweite Polyamid umfassende Zwischenschicht angrenzend an die zweite Hauptoberfläche der Kernschicht,
iv) eine äußere Schicht, die amorphes cyclisches Olefincopolymer oder eine Mischung aus amorphem cyclischen Olefincopolymer und mindestens einem olefinischen Copolymer umfasst,
v) eine innere Schicht, die ein olefinisches Copolymer oder eine Mischung aus einem olefinischen Copolymer und einem amorphen cyclischen Olefincopolymer umfasst,
vi) eine erste Verbindungsschicht, die die erste Zwischenschicht mit der äußeren Schicht verbindet und
vii) eine zweite Verbindungsschicht, die die zweite Zwischenschicht mit der inneren Schicht verbindet,
wobei die erste koextrudierte Mehrschichtfolie eine Innenseitenoberfläche und eine Außenseitenoberfläche aufweist,
b) eine zweite koextrudierte Mehrschichtfolie umfassend
i) eine Kernschicht mit einer ersten Hauptoberfläche und einer zweiten Hauptoberfläche, die Ethylenvinylalkoholcopolymer, polymeren Klebstoff oder Polyamid umfasst,
ii) eine erste Polyamid umfassende Zwischenschicht angrenzend an die erste Hauptoberfläche der Kernschicht,
iii) eine zweite Polyamid umfassende Zwischenschicht angrenzend an die zweite Hauptoberfläche der Kernschicht,
iv) eine äußere Schicht, die amorphes cyclisches Olefincopolymer oder eine Mischung aus amorphem cyclischen Olefincopolymer und mindestens einem olefinischen Copolymer umfasst,
v) eine innere Schicht, die ein olefinisches Copolymer oder eine Mischung aus einem olefinischen Copolymer und einem amorphen cyclischen Olefincopolymer umfasst;
vi) eine erste Verbindungsschicht, die die erste Zwischenschicht mit der äußeren Schicht verbindet, und
vii) eine zweite Verbindungsschicht, die die zweite Zwischenschicht mit der inneren Schicht verbindet,
wobei die zweite koextrudierte Mehrschichtfolie eine Innenseitenoberfläche und eine Außenseitenoberfläche aufweist,
c) ein gedrucktes Bild angeordnet auf der Außenseitenoberfläche der ersten koextrudierten Mehrschichtfolie oder der Innenseitenoberfläche der zweiten koextrudierten Mehrschichtfolie und
d) einen Klebstoff, der die äußere Schicht der ersten koextrudierten Mehrschichtfolie mit der inneren Schicht der zweiten koextrudierten Mehrschichtfolie verbindet.

2. Aseptische Verpackung umfassend:
a) ein sterilisiertes Nahrungsmittelprodukt, und
b) einen sterilisierten Beutel, in dem das sterilisierte Nahrungsmittelprodukt angeordnet ist, wobei der sterilisierte Beutel ein bedrucktes Laminat umfasst, das
i) eine erste koextrudierte Mehrschichtfolie umfassend
(a) eine Kernschicht mit einer ersten Hauptoberfläche und einer zweiten Hauptoberfläche, die Ethylenvinylalkoholcopolymer, polymeren Klebstoff oder Polyamid umfasst,
(b) eine erste Polyamid umfassende Zwischenschicht angrenzend an die erste Hauptoberfläche der Kernschicht,
(c) eine zweite Polyamid umfassende Zwischenschicht angrenzend an die zweite Hauptoberfläche der Kernschicht,
(d) eine äußere Schicht, die amorphes cyclisches Olefincopolymer oder eine Mischung aus amorphem cyclischen Olefincopolymer und mindestens einem olefinischen Copolymer umfasst,
(e) eine innere Schicht, die olefinisches Copolymer oder eine Mischung aus einem olefinischen Copolymer und einem amorphen cyclischen Olefincopolymer umfasst,
(f) eine erste Verbindungsschicht, die die erste Zwischenschicht mit der äußeren Schicht verbindet, und
(g) eine zweite Verbindungsschicht, die die zweite Zwischenschicht mit der inneren Schicht verbindet,
wobei die erste koextrudierte Mehrschichtfolie eine Innenseitenoberfläche und eine Außenseitenoberfläche aufweist;
ii) eine zweite koextrudierte Mehrschichtfolie umfassend
a) eine Kernschicht mit einer ersten Hauptoberfläche und einer zweiten Hauptoberfläche, die Ethylenvinylalkoholcopolymer, polymeren Klebstoff oder Polyamid umfasst,
b) eine erste Polyamid umfassende Zwischenschicht angrenzend an die erste Hauptoberfläche der Kernschicht,
c) eine zweite Polyamid umfassende Zwischenschicht angrenzend an die zweite Hauptoberfläche der Kernschicht,
d) eine äußere Schicht, die amorphes cyclisches Olefincopolymer oder eine Mischung aus amorphem cyclischen Olefincopolymer und mindestens einem olefinischen Copolymer umfasst,
e) eine innere Schicht, die ein olefinisches Copolymer oder eine Mischung aus einem olefinischen Copolymer und einem amorphen cyclischen Olefincopolymer umfasst;
f) eine erste Verbindungsschicht, die die erste Zwischenschicht mit der äußeren Schicht verbindet, und
g) eine zweite Verbindungsschicht, die die zweite Zwischenschicht mit der inneren Schicht verbindet,
wobei die zweite koextrudierte Mehrschichtfolie eine Innenseitenoberfläche und eine Außenseitenoberfläche aufweist,
iii) ein gedrucktes Bild angeordnet auf der Außenseitenoberfläche der ersten koextrudierten Mehrschichtfolie oder der Innenseitenoberfläche der zweiten koextrudierten Mehrschichtfolie und
iv) einen Klebstoff, der die äußere Schicht der ersten koextrudierten Mehrschichtfolie mit der inneren Schicht der zweiten koextrudierten Mehrschichtfolie verbindet, umfasst.

3. Bedrucktes sterilisierbares Laminat nach Anspruch 1 oder aseptische Verpackung nach Anspruch 2, bei dem bzw. bei der die erste koextrudierte Mehrschichtfolie und die zweite koextrudierte Mehrschichtfolie jeweils eine Dicke von 20 bis 160µm aufweisen.

4. Bedrucktes sterilisierbares Laminat nach Anspruch 1 oder 3 oder aseptische Verpackung nach Anspruch 2 oder 3, bei dem bzw. bei der die Dicke der zweiten koextrudierten Mehrschichtfolie weniger als 50% der Dicke der ersten koextrudierten Mehrschichtfolie beträgt.

5. Bedrucktes sterilisierbares Laminat gemäß einem der Ansprüche 1, 3 oder 4 oder aseptische Verpackung gemäß einem der Ansprüche 2 bis 4, bei dem bzw. bei der das gedruckte Bild auf der Innenseitenoberfläche der zweiten koextrudierten Mehrschichtfolie angeordnet ist.

6. Bedrucktes sterilisierbares Laminat gemäß einem der Ansprüche 1 oder 3 bis 5 oder aseptische Verpackung gemäß einem der Ansprüche 2 bis 5, bei dem bzw. bei der die äußere Schicht der ersten koextrudierten Mehrschichtfolie eine Mischung aus amorphem cyclischen Olefincopolymer und semikristallinem olefinischen Polymer umfasst.

7. Bedrucktes sterilisierbares Laminat gemäß einem der Ansprüche 1 oder 3 bis 6 oder aseptische Verpackung gemäß einem der Ansprüche 2 bis 6, bei dem bzw. bei der
a) die äußere Schicht der ersten koextrudierten Mehrschichtfolie eine Korona-behandelte Oberfläche aufweist,
b) die innere Schicht der zweiten extrudierten Mehrschichtfolie eine Korona-behandelte Oberfläche aufweist,
c) die äußere Schicht der zweiten koextrudierten Mehrschichtfolie eine nicht-Korona-behandelte Oberfläche aufweist und
d) die innere Schicht der ersten koextrudierten Mehrschichtfolie eine nicht-Korona-behandelte Oberfläche aufweist.

8. Bedrucktes sterilisierbares Laminat gemäß einem der Ansprüche 1 oder 3 bis 7 oder aseptische Verpackung gemäß einem der Ansprüche 2 bis 7, bei dem bzw. bei der
a) die Zusammensetzung der äußeren Schicht der ersten koextrudierten Mehrschichtfolie verschieden ist von der Zusammensetzung der inneren Schicht der zweiten koextrudierten Mehrschichtfolie und
b) die Zusammensetzung der inneren Schicht der ersten koextrudierten Mehrschichtfolie verschieden ist von der Zusammensetzung der äußeren Schicht der zweiten koextrudierten Mehrschichtfolie.

9. Verfahren zur Herstellung einer aseptischen Verpackung, bei dem
a) ein Nahrungsmittelprodukt sterilisiert wird,
b) ein bedrucktes Laminat sterilisiert wird, das umfasst
i) eine erste koextrudierte Mehrschichtfolie umfassend
a) eine Kernschicht mit einer ersten Hauptoberfläche und einer zweiten Hauptoberfläche, die Ethylenvinylalkoholcopolymer, polymeren Klebstoff oder Polyamid umfasst,
b) eine erste Polyamid umfassende Zwischenschicht angrenzend an die erste Hauptoberfläche der Kernschicht,
c) eine zweite Polyamid umfassende Zwischenschicht angrenzend an die zweite Hauptoberfläche der Kernschicht,
d) eine äußere Schicht, die amorphes cyclisches Olefincopolymer oder eine Mischung aus amorphem cyclischen Olefincopolymer und mindestens einem olefinischen Copolymer umfasst,
e) eine innere Schicht, die olefinisches Copolymer oder eine Mischung aus einem olefinischen Copolymer und einem amorphen cyclischen Olefincopolymer umfasst,
f) eine erste Verbindungsschicht, die die ersten Zwischenschicht mit der äußeren Schicht verbindet, und
g) eine zweite Verbindungsschicht, die die zweite Zwischenschicht mit der inneren Schicht verbindet,
wobei die erste koextrudierte Mehrschichtfolie eine Innenseitenoberfläche und eine Außenseitenoberfläche aufweist;
ii) eine zweite koextrudierte Mehrschichtfolie umfassend
(a) eine Kernschicht mit einer ersten Hauptoberfläche und einer zweiten Hauptoberfläche, die Ethylenvinylalkoholcopolymer, polymeren Klebstoff oder Polyamid umfasst,
(b) eine erste Polyamid umfassende Zwischenschicht angrenzend an die erste Hauptoberfläche der Kernschicht,
(c) eine zweite Polyamid umfassende Zwischenschicht angrenzend an die zweite Hauptoberfläche der Kernschicht,
(d) eine äußere Schicht, die amorphes cyclisches Olefincopolymer oder eine Mischung aus amorphem cyclischen Olefincopolymer und mindestens einem olefinischen Copolymer umfasst,
(e) eine innere Schicht, die ein olefinisches Copolymer oder eine Mischung aus einem olefinischen Copolymer und einem amorphen cyclischen Olefincopolymer umfasst;
(f) eine erste Verbindungsschicht, die die erste Zwischenschicht mit der äußeren Schicht verbindet, und
(g) eine zweite Verbindungsschicht, die die zweite Zwischenschicht mit der inneren Schicht verbindet,
wobei die zweite koextrudierte Mehrschichtfolie eine Innenseitenoberfläche und eine Außenseitenoberfläche aufweist,
iii) ein gedrucktes Bild angeordnet auf der Außenseitenoberfläche der ersten koextrudierten Mehrschichtfolie oder der Innenseitenoberfläche der zweiten koextrudierten Mehrschichtfolie und
iv) einen Klebstoff, der die äußere Schicht der ersten koextrudierten Mehrschichtfolie mit der inneren Schicht der zweiten koextrudierten Mehrschichtfolie verbindet,
c) die sterilisierte Folie zu einem Beutel geformt wird,
d) der Beutel mit dem sterilisierten Nahrungsmittelprodukt gefüllt wird und
e) der Beutel versiegelt wird.

10. Verfahren nach Anspruch 9, bei dem die ersten koextrudierte Mehrschichtfolie und die zweite koextrudierte Mehrschichtfolie jeweils eine Dicke von 20 bis 160 µm aufweisen.

11. Verfahren nach Anspruch 9 oder 10, bei dem die Dicke der zweiten koextrudierten Mehrschichtfolie weniger als 50% der Dicke der ersten koextrudierten Mehrschichtfolie beträgt.

12. Verfahren nach Anspruch 9, 10 oder 11, bei dem das gedruckte Bild auf der Innenseitenoberfläche der zweiten koextrudierten Mehrschichtfolie angeordnet ist.

13. Verfahren nach einem der Ansprüche 9 bis 12, bei dem
a) die äußere Schicht der ersten koextrudierten Mehrschichtfolie eine Korona-behandelte Oberfläche aufweist,
b) die innere Schicht der zweiten koextrudierten Mehrschichtfolie eine Korona-behandelte Oberfläche aufweist,
c) die äußere Schicht der zweiten koextrudierten Mehrschichtfolie eine nicht-Korona-behandelte Oberfläche aufweist und
d) die innere Schicht der ersten koextrudierten Mehrschichtfolie eine nicht-Korona-behandelte Oberfläche aufweist.

14. Verfahren nach einem der Ansprüche 9 bis 13, bei dem
a) die Zusammensetzung der äußeren Schicht der ersten koextrudierten Mehrschichtfolie verschieden ist von der Zusammensetzung der inneren Schicht der zweiten koextrudierten Mehrschichtfolie und
b) die Zusammensetzung der inneren Schicht der ersten koextrudierten Mehrschichtfolie verschieden ist von der der Zusammensetzung der äußeren Schicht der zweiten koextrudierten Mehrschichtfolie.

## Revendications

1. Stratifié imprimé stérilisable pour conditionnement aseptique, comprenant :
a) un premier film multicouche coextrudé, comprenant :
i) une couche de coeur, présentant une première grande surface et une deuxième grande surface, et comprenant un copolymère d'éthylène et d'alcool vinylique, un adhésif polymère ou un polyamide,
ii) une première couche intermédiaire, adjacente à la première grande surface de la couche de coeur et comprenant un polyamide,
iii) une deuxième couche intermédiaire, adjacente à la deuxième grande surface de la couche de coeur et comprenant un polyamide,
iv) une couche externe comprenant un copolymère amorphe d'oléfine cyclique, ou un mélange de copolymère amorphe d'oléfine cyclique et d'au moins un copolymère oléfinique,
v) une couche interne comprenant un copolymère oléfinique, ou un mélange d'un copolymère oléfinique et de copolymère amorphe d'oléfine cyclique,
vi) une première couche d'attache qui fait adhérer la première couche intermédiaire à la couche externe,
vii) et une deuxième couche d'attache qui fait adhérer la deuxième couche intermédiaire à la couche interne ;
lequel premier film multicouche coextrudé présente une surface intérieure et une surface extérieure ;
b) un deuxième film multicouche coextrudé, comprenant :
i) une couche de coeur, présentant une première grande surface et une deuxième grande surface, et comprenant un copolymère d'éthylène et d'alcool vinylique, un adhésif polymère ou un polyamide,
ii) une première couche intermédiaire, adjacente à la première grande surface de la couche de coeur et comprenant un polyamide,
iii) une deuxième couche intermédiaire, adjacente à la deuxième grande surface de la couche de coeur et comprenant un polyamide,
iv) une couche externe comprenant un copolymère amorphe d'oléfine cyclique, ou un mélange de copolymère amorphe d'oléfine cyclique et d'au moins un copolymère oléfinique,
v) une couche interne comprenant un copolymère oléfinique, ou un mélange d'un copolymère oléfinique et de copolymère amorphe d'oléfine cyclique,
vi) une première couche d'attache qui fait adhérer la première couche intermédiaire à la couche externe,
vii) et une deuxième couche d'attache qui fait adhérer la deuxième couche intermédiaire à la couche interne,
lequel deuxième film multicouche coextrudé présente une surface intérieure et une surface extérieure ;
c) une image imprimée placée sur la surface extérieure du premier film multicouche coextrudé, ou sur la surface intérieure du deuxième film multicouche coextrudé ;
d) et un adhésif qui lie la couche externe du premier film multicouche coextrudé à la couche interne du deuxième film multicouche coextrudé.

2. Conditionnement aseptique, comprenant :
A) un produit alimentaire stérilisé,
B) et une poche stérilisée dans laquelle est placé ce produit alimentaire stérilisé, laquelle poche stérilisée comprend un stratifié imprimé comprenant :
i) un premier film multicouche coextrudé, comprenant :
a) une couche de coeur, présentant une première grande surface et une deuxième grande surface, et comprenant un copolymère d'éthylène et d'alcool vinylique, un adhésif polymère ou un polyamide,
b) une première couche intermédiaire, adjacente à la première grande surface de la couche de coeur et comprenant un polyamide,
c) une deuxième couche intermédiaire, adjacente à la deuxième grande surface de la couche de coeur et comprenant un polyamide,
d) une couche externe comprenant un copolymère amorphe d'oléfine cyclique, ou un mélange de copolymère amorphe d'oléfine cyclique et d'au moins un copolymère oléfinique,
e) une couche interne comprenant un copolymère oléfinique, ou un mélange d'un copolymère oléfinique et de copolymère amorphe d'oléfine cyclique,
f) une première couche d'attache qui fait adhérer la première couche intermédiaire à la couche externe,
g) et une deuxième couche d'attache qui fait adhérer la deuxième couche intermédiaire à la couche interne ;
lequel premier film multicouche coextrudé présente une surface intérieure et une surface extérieure ;
ii) un deuxième film multicouche coextrudé, comprenant :
a) une couche de coeur, présentant une première grande surface et une deuxième grande surface, et comprenant un copolymère d'éthylène et d'alcool vinylique, un adhésif polymère ou un polyamide,
b) une première couche intermédiaire, adjacente à la première grande surface de la couche de coeur et comprenant un polyamide,
c) une deuxième couche intermédiaire, adjacente à la deuxième grande surface de la couche de coeur et comprenant un polyamide,
d) une couche externe comprenant un copolymère amorphe d'oléfine cyclique, ou un mélange de copolymère amorphe d'oléfine cyclique et d'au moins un copolymère oléfinique,
e) une couche interne comprenant un copolymère oléfinique, ou un mélange d'un copolymère oléfinique et de copolymère amorphe d'oléfine cyclique,
f) une première couche d'attache qui fait adhérer la première couche intermédiaire à la couche externe,
g) et une deuxième couche d'attache qui fait adhérer la deuxième couche intermédiaire à la couche interne,
lequel deuxième film multicouche coextrudé présente une surface intérieure et une surface extérieure ;
iii) une image imprimée placée sur la surface extérieure du premier film multicouche coextrudé, ou sur la surface intérieure du deuxième film multicouche coextrudé ;
iv) et un adhésif qui lie la couche externe du premier film multicouche coextrudé à la couche interne du deuxième film multicouche coextrudé.

3. Stratifié imprimé stérilisable conforme à la revendication 1, ou conditionnement aseptique conforme à la revendication 2, dans lequel le premier film multicouche coextrudé et le deuxième film multicouche coextrudé présentent chacun une épaisseur de 20 à 160 micromètres.

4. Stratifié imprimé stérilisable conforme à la revendication 1 ou 3, ou conditionnement aseptique conforme à la revendication 2 ou 3, dans lequel l'épaisseur du deuxième film multicouche coextrudé vaut moins de 50 % de l'épaisseur du premier film multicouche coextrudé.

5. Stratifié imprimé stérilisable conforme à l'une des revendications 1, 3 et 4, ou conditionnement aseptique conforme à l'une des revendications 2 à 4, dans lequel l'image imprimée est placée sur la surface intérieure du deuxième film multicouche coextrudé.

6. Stratifié imprimé stérilisable conforme à l'une des revendications 1 et 3 à 5, ou conditionnement aseptique conforme à l'une des revendications 2 à 5, dans lequel la couche externe du premier film multicouche coextrudé comprend un mélange de copolymère amorphe d'oléfine cyclique et de polymère oléfinique semicristallin.

7. Stratifié imprimé stérilisable conforme à l'une des revendications 1 et 3 à 6, ou conditionnement aseptique conforme à l'une des revendications 2 à 6, dans lequel
a) la couche externe du premier film multicouche coextrudé présente une surface qui a été traitée par effet corona ;
b) la couche interne du deuxième film multicouche coextrudé présente une surface qui a été traitée par effet corona ;
c) la couche externe du deuxième film multicouche coextrudé présente une surface qui n'a pas été traitée par effet corona ;
d) et la couche interne du premier film multicouche coextrudé présente une surface qui n'a pas été traitée par effet corona.

8. Stratifié imprimé stérilisable conforme à l'une des revendications 1 et 3 à 7, ou conditionnement aseptique conforme à l'une des revendications 2 à 7, dans lequel
a) la composition de la couche externe du premier film multicouche coextrudé est différente de la composition de la couche interne du deuxième film multicouche coextrudé ;
b) et la composition de la couche interne du premier film multicouche coextrudé est différente de la composition de la couche externe du deuxième film multicouche coextrudé.

9. Procédé de fabrication d'un conditionnement aseptique, qui comporte les étapes suivantes :
A) stériliser un produit alimentaire ;
B) stériliser un stratifié imprimé comprenant :
i) un premier film multicouche coextrudé, comprenant :
a) une couche de coeur, présentant une première grande surface et une deuxième grande surface, et comprenant un copolymère d'éthylène et d'alcool vinylique, un adhésif polymère ou un polyamide,
b) une première couche intermédiaire, adjacente à la première grande surface de la couche de coeur et comprenant un polyamide,
c) une deuxième couche intermédiaire, adjacente à la deuxième grande surface de la couche de coeur et comprenant un polyamide,
d) une couche externe comprenant un copolymère amorphe d'oléfine cyclique, ou un mélange de copolymère amorphe d'oléfine cyclique et d'au moins un copolymère oléfinique,
e) une couche interne comprenant un copolymère oléfinique, ou un mélange d'un copolymère oléfinique et de copolymère amorphe d'oléfine cyclique,
f) une première couche d'attache qui fait adhérer la première couche intermédiaire à la couche externe,
g) et une deuxième couche d'attache qui fait adhérer la deuxième couche intermédiaire à la couche interne ;
lequel premier film multicouche coextrudé présente une surface intérieure et une surface extérieure ;
ii) un deuxième film multicouche coextrudé, comprenant :
a) une couche de coeur, présentant une première grande surface et une deuxième grande surface, et comprenant un copolymère d'éthylène et d'alcool vinylique, un adhésif polymère ou un polyamide,
b) une première couche intermédiaire, adjacente à la première grande surface de la couche de coeur et comprenant un polyamide,
c) une deuxième couche intermédiaire, adjacente à la deuxième grande surface de la couche de coeur et comprenant un polyamide,
d) une couche externe comprenant un copolymère amorphe d'oléfine cyclique, ou un mélange de copolymère amorphe d'oléfine cyclique et d'au moins un copolymère oléfinique,
e) une couche interne comprenant un copolymère oléfinique, ou un mélange d'un copolymère oléfinique et de copolymère amorphe d'oléfine cyclique,
f) une première couche d'attache qui fait adhérer la première couche intermédiaire à la couche externe,
g) et une deuxième couche d'attache qui fait adhérer la deuxième couche intermédiaire à la couche interne,
lequel deuxième film multicouche coextrudé présente une surface intérieure et une surface extérieure ;
iii) une image imprimée placée sur la surface extérieure du premier film multicouche coextrudé, ou sur la surface intérieure du deuxième film multicouche coextrudé ;
iv) et un adhésif qui lie la couche externe du premier film multicouche coextrudé à la couche interne du deuxième film multicouche coextrudé ;
C) faire de ce film stérilisé une poche ;
D) remplir cette poche avec le produit alimentaire stérilisé ;
E) et fermer hermétiquement la poche.

10. Procédé conforme à la revendication 9, dans lequel le premier film multicouche coextrudé et le deuxième film multicouche coextrudé présentent chacun une épaisseur de 20 à 160 micromètres.

11. Procédé conforme à la revendication 9 ou 10, dans lequel l'épaisseur du deuxième film multicouche coextrudé vaut moins de 50 % de l'épaisseur du premier film multicouche coextrudé.

12. Procédé conforme à la revendication 9, 10 ou 11, dans lequel l'image imprimée est placée sur la surface intérieure du deuxième film multicouche coextrudé.

13. Procédé conforme à l'une des revendications 9 à 12, dans lequel
a) la couche externe du premier film multicouche coextrudé présente une surface qui a été traitée par effet corona ;
b) la couche interne du deuxième film multicouche coextrudé présente une surface qui a été traitée par effet corona ;
c) la couche externe du deuxième film multicouche coextrudé présente une surface qui n'a pas été traitée par effet corona ;
d) et la couche interne du premier film multicouche coextrudé présente une surface qui n'a pas été traitée par effet corona.

14. Procédé conforme à l'une des revendications 9 à 13, dans lequel
a) la composition de la couche externe du premier film multicouche coextrudé est différente de la composition de la couche interne du deuxième film multicouche coextrudé ;
b) et la composition de la couche interne du premier film multicouche coextrudé est différente de la composition de la couche externe du deuxième film multicouche coextrudé.
